Europäisches Patentamt

European Patent Office

Office européen des brevets

(19)

(11) **EP 1 128 610 A2**

(12) **EUROPEAN PATENT APPLICATION**

(43) Date of publication:
29.08.2001 Bulletin 2001/35

(51) Int Cl.[7]: **H04L 12/56**

(21) Application number: 00310823.0

(22) Date of filing: 06.12.2000

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.12.1999 CA 2291835**

(71) Applicant: **Nortel Networks Limited**
**Montreal, Quebec H2Y 3Y4 (CA)**

(72) Inventors:
• **Chapman, Alan Stanley John**
**Kanata, Ontario, K2K 1V5 (CA)**

• **Montuno, Delfin Y.**
**Kanata, Ontario, K2K 2L8 (CA)**
• **Aweya, James**
**Kanata, Ontario, K2G 3R6 (CA)**
• **Ouellette, Michel**
**Rockland, Ontario, K4K 1K7 (CA)**

(74) Representative: **Mackenzie, Andrew Bryan et al**
**Sommerville & Rushton,**
**45 Grosvenor Road**
**St Albans, Herts. AL1 3AW (GB)**

(54) **Load adaptive buffer management in packet networks**

(57) The setting of the queue thresholds in active queue management schemes such as RED (random early detection) is problematic because the required buffer size for good sharing among TCP connections is dependent on the number of TCP connection using the buffer. Techniques for enhancing the effectiveness of such buffer management schemes are described. The techniques dynamically change the threshold settings as the system load, e.g., the number of connections, changes. The invention uses variables that correlate well with system load. The variables should reflect the congestion notification rate since this rate is closely related to the TCP congestion window size which in turn is closely related to the system load. This can be, for instance, a measured loss rate or can also be a computed value such as the drop probability. Using the techniques, routers and switches can effectively control packets losses and TCP time-outs which maintaining high link utilization.

*Fig 1*

EP 1 128 610 A2

**Description**

**Field of Invention**

The present invention resides in the field of congestion control in packet networks. In particular, it is directed to buffer management techniques to be used at a node such as a router, switch, gateway, server, etc., that enable a network bottleneck to adapt quickly and dynamically to changes in offered load or available bandwidth so that the resources are better utilized and fairly shared by users.

**Background of Invention**

Congestion control in packet networks has proven to be a difficult problem, in general. The problem is particularly challenging in the Internet where congestion control is mainly provided by end-to-end mechanisms in TCP by which routers control their queues. A large factor in TCP's widespread use is its ability to adapt quickly to changes in offered load or available bandwidth. Although the invention is described in connection with TCP, it should be emphasized that the concept described herein is equally applicable to other mechanisms in which a similar congestion control scheme is used.

The performance of TCP becomes significantly degraded when the number of active TCP flows exceeds the network's bandwidth-delay product measured in packets. When the TCP sender's congestion window becomes less than 4 packets, TCP is no longer able to recover from a single packet loss since the fast-retransmit mechanism needs at least 3 duplicate acknowledgments (ACKs) to get triggered. Thus, the congestion windows below 4 are not amenable to the fast-retransmit mechanism of TCP and a single packet loss will send the connection into time-out.

With inadequate buffering, a large number of connections will tend to keep the buffers full and the resulting packet losses will force many of the connections into time-out. As link utilization grows, premature loss may occur long before full bottleneck utilization is achieved due to the bursty nature of IP traffic. Fine grain bandwidth sharing, where sharing is achieved over time intervals under 1 or 2 seconds, is important for interactive applications, but is not possible unless connections avoid time-outs. One way to solve this problem is to provision routers with not just one round-trip time of buffering, but buffering proportional to the total number of active flows. Many router vendors adopt the "one round-trip time" buffering approach. Although this is a step in the right direction, this only addresses the link utilization problem, but not the packet loss problem. It is important to note that the requirement to support large aggregations of traffic is of interest for any large deployment of IP, including existing or planned commercial IP services. It has been suggested in "TCP Behavior with Many Flows" by R. Morris, IEEE International Conference Network Protocols, Atlanta, Georgia, Oct. 1997 that buffer space of ten packets per flow is desirable. Large buffers should be possible in routers since the cost of memory is dropping rapidly due to demands in the computer industry. However, to ensure stable operation, large buffers require more active forms of management than the traditional tail-drop.

The basic idea behind active queue management schemes such as RED is to detect incipient congestion early and to convey congestion notification to the endsystems, thus allowing them to reduce their transmission rates (close the flow control windows) before queues in the network overflow and excessive numbers of packets are dropped. An article entitled "Random Early Detection Gateways for Congestion Avoidance" by Floyd et al, IEEE/ACM Transactions on Networking, Vol. 1, No. 4, Aug. 1993, pp. 397-413 describes the RED scheme.

The basic RED scheme (and its newer variants) maintains an average of the queue length. It then uses the average and a number of queue thresholds to detect congestion. RED schemes drop incoming packets in a random probabilistic manner where the probability is a function of recent buffer fill history. The objective is to provide a more equitable distribution of packet loss, avoid the synchronization of flows, and at the same time improve the utilization of the network. The setting of the queue thresholds in RED schemes is problematic because the buffer size for good sharing is dependent on the number of TCP connections using the buffer. To keep latency at the router low, it may be desirable to set the thresholds low. But setting it too low will cause many time-outs, which drastically degrade the latency perceived by the user. On the other hand, setting the thresholds too high unnecessarily increases the latency when operating with a small number of connections. This means the setting of the thresholds should not be done in an ad hoc manner but should be tied to the number of active connections sharing the same buffer.

It is important to note that high network utilization is only good when the packet loss rate is low. This is because high packet loss rates can negatively impact overall network and end-user performance. A lost packet consumes network resources before it is dropped, thereby impacting the efficiency in other parts of the network. As noted earlier, high packet loss rates also cause long and unpredictable delays as a result of TCP time-outs. It is therefore desirable to achieve high network utilization but with low packet loss rates. This means that even if large buffers are used in the network, to achieve high utilization, appropriate steps must also be taken to ensure that packet losses are low.

It would enhance the effectiveness of RED and other similar schemes if the threshold settings were dynamically changed as the number of connections changes. The article "Scalable TCP Congestion Control" by R. Morris, Ph.D. Thesis, Harvard University, available as of Dec. 3, 1999 at the author's website http://www.pdos.lcs.mit.edu/~rtm/papers/tp.pdf describes a technique to control packet losses by dynamically changing the queue threshold setting. The technique requires counting the number of connections by inspecting packet control headers. This technique, however, is impractical in real core networks. A short article on the same subject having the same title is also available at the website.

It is therefore envisaged that it would be better to have other measures for adjusting the thresholds in order to keep the loss rate at or below a specified value that would not cause too many time-outs. This would ensure robust operation of the data sources while also keeping the queue length as small as possible. The control strategy of the invention does not involve flow accounting complexities as in the afore-mentioned article by R. Morris.

In one embodiment, by estimating the actual loss rate and changing the buffer management parameters (e. g. thresholds) accordingly, it can be ensured that the loss rate will be controlled around a pre-specified target loss rate value. As the number of connections increases, the threshold will be adjusted upward to maintain a loss rate that will not cause excessive time-outs. As the number of connections decreases, the threshold will be adjusted downwards to keep the latency at the router as small as possible. This is to prevent excessive queue buildup when the number of flows is low. In further embodiments, the actual loss rate can be estimated by using a computed value, such as a drop probability or a measured value of packet loss over time.

Current TCP implementations expect that the router will drop packets as an indication of congestion. There have been proposals for indicating congestion by marking the packet rather than dropping it. It is also possible to indicate congestion by generating a congestion notification message directly back to the sender, thus avoiding the round trip delay. Such implementations can reduce the total buffer required per flow but still benefit from adjusting the buffer management to ensure that enough, but not too much, buffer is made available for the number of flows.

## Summary of Invention

The invention therefore resides in the field of buffer management schemes of a packet network. In accordance with one aspect, the invention is directed to a method of managing a buffer at an outgoing link of a node. The method comprises steps of monitoring the status of a queue in relation to a queue threshold and generating congestion notifications to data sources in response to the status of the queue. The method further includes steps of computing an indication concerning a system load of the node from the rate of congestion notifications and adjusting the queue threshold in response to the indication to keep the operation of the data sources within a preferred envelope.

In accordance with a further aspect, the invention is directed to a mechanism for managing a buffer at an outgoing link of a node in a packet network. The mechanism comprises a queue for buffering packets to be transmitted from the node onto the outgoing link and a first controller for monitoring the status of the queue with respect to a first queue threshold and generating congestion notifications to data sources in response the status of the queue. The mechanism further includes a parameter estimation block for generating an indication concerning a system load of the node and a second controller for adjusting the first queue threshold in response to the indication to keep the operation of the data sources within a preferred envelope.

## Brief Description of Drawings

Figure 1 is a schematic block diagram of an implementation according to an embodiment of the invention.

Figure 2 is a schematic illustration of a two-level control strategy.

Figure 3 is a schematic illustration of limiting the impact of setpoint changes.

Figure 4 is a block diagram of a ramp unit.

Figure 5 is a graph showing a drop probability as a function of average queue length.

Figure 6 is a graph showing a RED probability parameter.

## Detailed Description of Preferred Embodiments of Invention

The concept of the invention is to adjust thresholds of a queue at a node in relation to the system load (i.e., the number connections or flows). The main concepts will be described in detail in connection with active queue management schemes e.g., RED, DRED (Dynamic Random Early Detection), etc., which use random packet drop mechanism. They are, however, general enough to be applicable to other similar queue management schemes and schemes which use packet marking or direct backward congestion notification messages. DRED is an improved algorithm for active queue management and is capable of stabilizing a router queue at a level independent of the number of active connections. An applicant's copending application entitled "Method and Apparatus for Active Queue Management Based on Desired Queue Occupancy" (filing particulars not available) has inventors common to the inventors of the present application and describes the DRED scheme in detail.

This adaptation of queue thresholds to the system load is important because the required buffer size (and consequently the threshold settings) for good sharing among TCP connections is dependent on the number of TCP connections using the buffer. The invention uses variables that correlate well with system load. The variables should reflect the congestion notification rate since this rate is closely related to the TCP congestion window size which in turn is closely related to the system load. This can be, for instance, a measured loss rate or can also be a computed value such as the drop probability. In schemes such as RED, the computed value of drop probability is a good variable to use since it indicates the current intent of the scheme whereas a measured value must, of necessity, reflect some past time period.

The behavior of TCP is reviewed here. When packet loss rate is low, TCP can sustain its sending rate by the fast-retransmit/fast-recovery mechanism. The fast-retransmit/fast-recovery mechanism helps in the case of isolated losses, but not in burst losses (i.e., losses in a single window). As the packet loss rate increases, retransmissions become driven by time-outs. Packet loss affects the achievable bandwidth of a TCP connection. The achievable bandwidth can be computed as the window size $W$ of a connection divided by its round-trip time. In an ideal scenario where flows are relatively long and do not experience any time-outs and where losses are spread uniformly over time, a simple model for the average size of the congestion window $W$ of a TCP connection in the presence of loss is:

$$W = \sqrt{\frac{8}{3bp}}$$

where $b$ is the number of packets that are acknowledged by a received ACK, and is typically 2 since most TCP implementations employ "ack-every-other-packet" policies and $p$ is the probability that a packet is dropped. As $p$ increases, $W$ becomes smaller. This equation can be seen as approximating the average number of packets a TCP source will have in flight, given the loss rate $p$.

For $N$ connections, the number of packets in flight will be proportionately larger and in the presence of congestion most of those packets will be stored in the congestion buffer. Therefore, if the loss rate is to be maintained around a target level over a wide range of connections, then in order to prevent congestion collapse, it is desirable to adapt the buffering according to the system load (that is the number of connections or flows). It can be deduced from the above equation that buffering that automatically adapts to the number of flows while at the same time limits time-outs, queue length and maintains high utilization, is desirable. Previous work such as Morris has suggested counting the number of flows by inspecting packet headers but this has some expense in implementation and is problematic when encryption is present. Since the window size of a flow is closely linked to the loss rate, it is possible to estimate the number of flows by using the actual loss rate to determine the size of window that the flows are using and dividing that value into the current average buffer size. However, this invention uses the fact that the primary objective is to keep the window size above some minimum value and, in some embodiments, that value corresponds to a loss rate. If the loss rate is kept at or below this value then the objective is achieved without needing to know the actual number of flows.

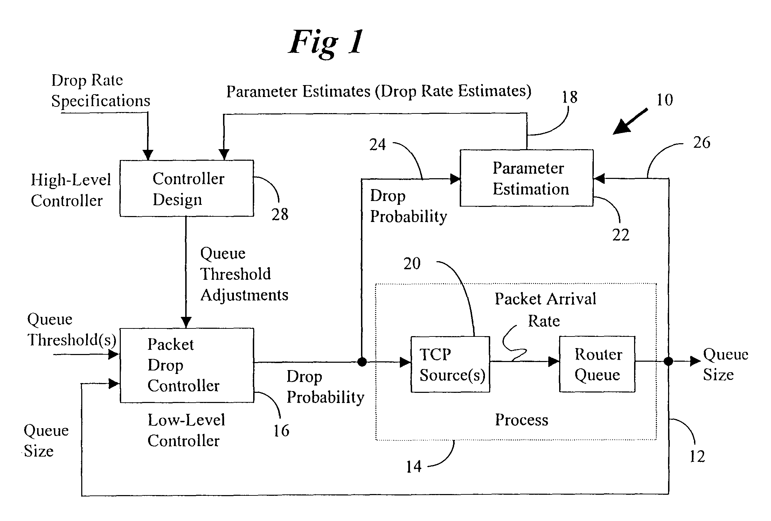

Figure 1 shows a block diagram of the control technique according to an embodiment of the invention. The system 10 can be viewed as having two loops. There is an inner loop 12, composed of the process 14 and the packet drop controller 16, and an outer loop 18, which adjusts the packet drop controller parameters based on the operating conditions. Process 14 is shown to include TCP sources 20 where each of these sources is the originating system of TCP traffic. Each is considered to form part of two loops because it responds to RED or DRED congestion notifications, which affect the packet arrival rate. The block diagram shows a parameter estimator 22 that estimates the parameters (e.g., an indication of the system load) of the process based on observations of process inputs (e.g., packet drop probability 24) and if required, outputs (e.g., queue sizes 26). There is also a controller design block 28 that computes some of the packet drop controller parameters based on the output of the parameter estimator. The output of the controller design block (i.e., computed parameters) is then used to perform queue threshold adjustments. The process parameters are computed (or estimated) continuously and the packet drop controller parameters are updated when new parameters values (e.g., a new indication of the system load) are obtained.

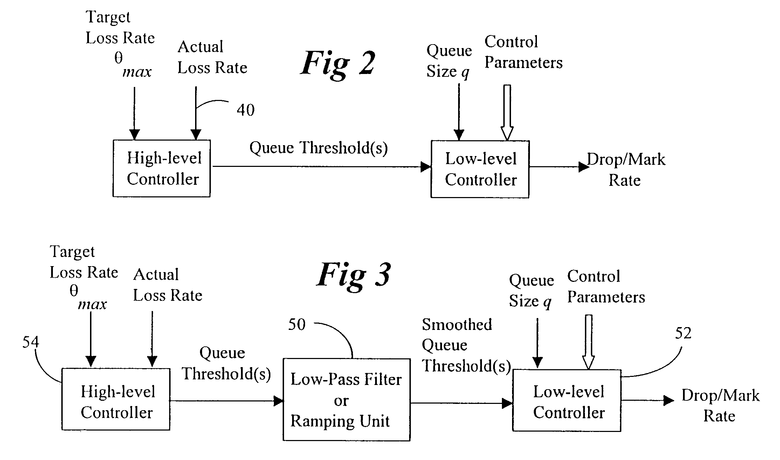

Referring further to Figure 1, the technique dynamically changes the queue threshold(s) of the packet drop controller 16 as the number of connections in the queue change. The packet drop controller adjusts to the number of connections by inspecting a load indication (e.g., drop probability, measured loss rate, etc.) and adjusting the thresholds to keep the loss rate at a value that would not cause too many time-outs. As the number of connections decreases the threshold will be adjusted downwards to keep the latency at the router as small as possible. This is to prevent excessive queue buildup when the number of flows is low. In this embodiment, a two-level control strategy is adopted, where a high-level controller (operating in the outer loop 18 on a slower time scale) sets the queue threshold(s) and a low-level controller (operating in the inner loop 12 on a faster time scale) computes the packet drop probability. It is assumed that there is sufficient buffering $B$ such that the queue threshold(s) can be varied as needed. It has been suggested that ten times as many buffers as the number of expected flows be provided. Figure 2 illustrates the two-level control strategy.

The high-level controller can be viewed as a "quasi-static" or "quasistationary" controller. That is, when there are any system disturbances or perturbations (due to, for example, a change in the number of connections, etc.), the system is allowed to settle into a new steady state before the queue threshold(s) is changed. This ensures that the threshold(s) is not changed unnecessarily to affect the computation (and stability) of packet drop probability which in turn depends on the threshold settings. The queue threshold(s) is, as a result, typically piece-wise constant with changes occurring at a slower pace.

The actual loss rate can be measured by observing the packet arrival process to the queue, or can be estimated by observing some parameters of the packet drop controller, available in some buffer management schemes (e.g., DRED, RED). In these buffer management schemes, the computed packet drop probability is a good measure of the actual loss rate to be used at 40 (Figure 2) since it approximates asymptotically the loss rate very well. The measured or computed packet drop probability can therefore be used as an indicator for varying the queue threshold (s) to further control packet losses.

The queue threshold(s) can be varied dynamically to keep the packet loss rate close to a pre-specified target loss rate value $\theta_{max}$ since TCP time-outs are very dependent on losses. Note that a target loss rate can only be attained if the network is properly engineered and there are adequate resources (e.g., buffers, capacity, etc.). Most random packet drop schemes have typically two queue thresholds, an upper threshold $T$ and a lower threshold $L$. In one embodiment of the invention, the upper threshold $T$ is selected as the manipulating variable (to achieve the desired control behavior), while the lower threshold $L$ is tied to the upper threshold through a simple linear relationship, e.g., $L=bT$, where $b$ is a constant for relating $L$ to $T$. $L$ can also be set to a fixed known value where appropriate as will be explained later. The control target $T$ can then be varied dynamically to keep the packet loss rate close to the pre-specified value $\theta_{max}$.

In a further embodiment, the measured or computed packet loss rate $p_l$ is filtered (or smoothed) to remove transient components before being used in the high-level controller. The smoothed signal is obtained using an EWMA (exponentially weighted moving average) filter with gain $\gamma$ (more weight given to the history):

$$\hat{p}_l \leftarrow (1-\gamma)\hat{p}_l + \gamma p_l, \qquad 0 < \gamma < 1$$

The actual packet loss rate is approximated by $\hat{p}_l$. If no filtering is required, then $\hat{p}_l = p_l$. The target loss rate is selected, for example, to be $\theta_{max}=5\%$.

Two algorithms for dynamically adjusting the threshold $T$ to achieve the desired control performance are described below according to embodiments of the invention.

**Algorithm 1:**

Basic Mechanism:
If $|\hat{p}_l - \theta_{max}| > \varepsilon$ continuously for $\delta$ sec, then

$$T \leftarrow \left[T + \Delta T.\text{sgn}[\hat{p}_l - \theta_{max}]\right]_{T_{min}}^{T_{max}}.$$

Sample Implementation:

```
begin:get new p̂ₗ value
        start = time_now
        while |p̂ₗ − θₘₐₓ| > ε
                stop = time_now
                if stop - start >= δ sec
```

$$T \leftarrow \left[T + \Delta T.\mathrm{sgn}[\hat{p}_l - \theta_{max}]\right]_{T_{min}}^{T_{max}}$$

```
                break out of while loop
                endif
                get new p̂ₗ value
        endwhile
        go to begin
        /* time_now is a free running system clock */
```

where

ε is a tolerance value to eliminate unnecessary updates of $T$ (e.g., $\varepsilon$ = 2%)
δ is an elapse time used to check the loss rate mismatch, (e.g., $\delta$ = 1 sec)
$\Delta T$ is the control step size and is given as $\Delta T = B/K$, i.e., the buffer size $B$ is divided into $K$ bands (e.g., $K$ = 8, 10, 12, etc.)
sgn [.] denotes the sign of [.]
$T_{max}$ is an upper bound on $T$, since $T$ cannot be allowed to be close to $B$ resulting in drop-tail behavior
$T_{min}$ is a lower bound on $T$ in order to maintain high link utilization since $T$ should not be allowed to be close to 0. $T_{min}$ can be set to one bandwidth-delay product worth of data.

The above procedure ensures that $T$ is only changed when it is certain that the packet loss rate has deviated from the target by an amount equal to ε (2%). The system then tries to maintain losses within the range $\theta_{max} \pm \varepsilon$.

**<u>Algorithm 2:</u>**

Basic Mechanism:
The queue threshold $T$ is only changed when the loss rate $\hat{p}_l$ is either above or below the target loss rate $\theta_{max}$ and the loss rate is deviating from the target loss rate.

Sample Implementation:

$$\text{every } \delta \text{ seconds do the following:}$$
$$\text{if } \hat{p}_l(now) - \theta_{max} > 0.0 \text{ then}$$
$$\text{if } \hat{p}_l(now) - \hat{p}_l(previous) > 0.0$$
$$\text{increase } T\text{: } T \leftarrow \left[T + \Delta T\right]_{T_{min}}^{T_{max}}$$
$$\text{else do not change } T$$
$$\text{else if } \hat{p}_l(now) - \theta_{max} < 0.0 \text{ then}$$
$$\text{if } \hat{p}_l(now) - \hat{p}_l(previous) < 0.0$$
$$\text{decrease } T\text{: } T \leftarrow \left[T - \Delta T\right]_{T_{min}}^{T_{max}}$$
$$\text{else do not change } T$$

In the above procedure there is no notion of a loss tolerance $\varepsilon$. Once the loss rate goes above/below the target loss rate, indicating that there is a drift from the target, the queue threshold $T$ is then increased/decreased. Otherwise the threshold is "frozen" since further changes can cause the loss rate to deviate further from the target loss rate. The deviations $p_l(now) - p_l(previous)$ in the above procedure can be computed over shorter sampling intervals (e.g., periods smaller than $\delta$ seconds) or over longer intervals, depending on the measurement overhead allowed.

In most buffer management schemes, the control loops have constant thresholds (or setpoints). But as discussed above, the thresholds may change at certain time instances because of desires to change operating conditions such as user delays, loss rates, etc. A threshold is, as a result, typically piece-wise constant with changes occurring less frequently. It is therefore suitable to view the threshold as a step function. Since the threshold is a system disturbance that can be accessed to, it is possible to feed it through a low-pass filter or a ramping module before it enters the low-level controller. In this way, the step function can be made smoother. This property can be useful, since most control designs having a good rejection of load disturbances give large overshoots after a sudden change in the threshold. Smoothing of the queue threshold is particularly important when the step change $\Delta T$ is large. This way the command signals from the high-level controller can be limited so that setpoint changes are not generated at a faster rate than the system can cope.

Figure 3 shows a scheme for limiting the impact of setpoint changes. In the Figure, a low pass filter or ramping unit 50 is located between low-level controller 52 and high-level controller 54. As in the earlier figures, two controllers take in same inputs and generate similar outputs except that the queue threshold(s) from the high-level controller is passed through filter 50 to smooth out the signal.

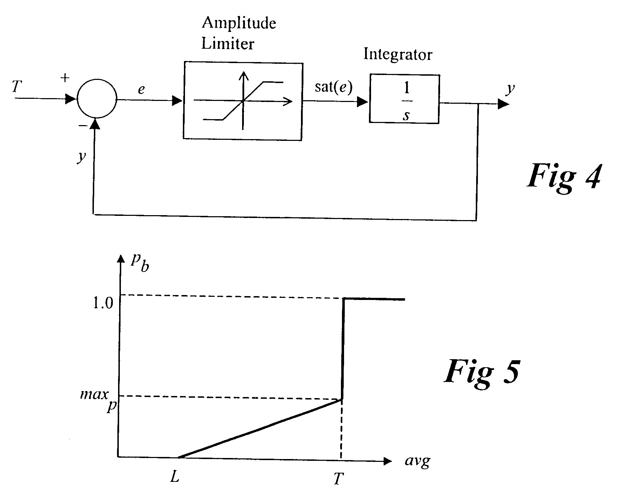

Figure 4 is a block diagram of a ramp unit or rate limiter that can replace the low-pass filter. The output of the ramp unit will attempt to follow the input signals. Since there is an integral action in the ramp unit, the inputs and the outputs will be identical in steady state. Since the output is generated by an integrator with limited input signal, the rate of change of the output will be limited to the bounds given by the limiter. Figure 4 can be described by the following equations:

$$\frac{dy}{dt} = \text{sat}(e) = \text{sat}(T - y)$$

in continuous-time domain
and

$$\left.\begin{array}{l} \Delta y(n) = y(n) - y(n-1) = \text{sat}(T - y(n-1)) \\[2em] y(n) = y(n-1) + \text{sat}(T - y(n-1)) \end{array}\right\} \text{ in discrete-time domain.}$$

The amplitude limiter or saturation "sat($e$)" is defined as

$$sat(e) = \begin{cases} -a, & e \leq -a \\ e, & |e| < a \\ a, & e \geq a \end{cases}$$

where the limit a can be defined as a small fraction of the step size $\Delta T$ i.e., $a = g^* \Delta T$, $0 < g < 1$, if $\Delta T$ is large enough to require a smoothing of $T$. Smoothing may not be required for small $\Delta T$. In Figure 4, $y$ is the smoothed threshold input to the low-level controller. The smoothing of $T$ can be implemented in discrete time steps simply as follows:

```
initialize  y ← 0
while  e = T − y ≠ 0
        y ← y + sat(e)
        pass y to the low-level controller
        wait for next y computing time
endwhile
```

The time interval between the $y$ computations should be smaller than the time interval between the threshold changes.

An embodiment using the DRED algorithm

As mentioned earlier, the Dynamic-RED (DRED) algorithm is an active queue management technique which uses a simple control-theoretic approach to stabilize a router queue occupancy at a level independent of the number of active connections. The benefits of a stabilized queue in a network are high resources utilization, predictable delays, ease in buffer provisioning, and traffic-loadindependent network performance (in terms of traffic intensity and number of connections).

The actual queue size in the router is assumed to be measured over a window of $\Delta t$ units of time (seconds), and the packet drop controller provides a new value of the packet drop probability $p_d$ every $\Delta t$ units of time. Therefore, $\Delta t$ is the sampling/control interval of the system. Let $q(n)$ denote the actual queue size at discrete time $n$, where n=1 $\Delta t$, $2\Delta t$, $3\Delta t$, $4\Delta t$,..., and let $T$ denote the target buffer occupancy. The goal of the controller is therefore to adapt $p_d$ so that the magnitude of the error signal $e(n) = q(n) - T(n)$ is kept as small as possible.

A lower queue threshold parameter $L$ is introduced in the control process to help maintain high link utilization and keep the queue size around the target level. The parameter $L$ is typically set a little lower than $T$, e.g., $L = bT$, $b \in [0.8, 0.9]$. DRED does not drop packets when $q(n) < L$ in order to maintain high resource utilization and also not to further penalize sources which are in the process of backing off in response to (previous) packet drops. Note that there is always a time lag between the time a packet is dropped and the time a source responds to the packet drop. The computation of $p_d$, however, still continues even if packet dropping is suspended (when $q(n) < L$).

The DRED computations can be summarized as follows assuming a slow varying threshold $T(n)$:

DRED control parameters:

Control gain $\alpha$; Filter gain $\beta$; Target buffer occupancy $T(n)$;
Minimum queue threshold $L(n) = bT(n)$, $b \in [0.8, 0.9]$

At time $n$:

Sample queue size: $q(n)$
Compute current error signal: $e(n) = q(n) - T(n)$
Compute filtered error signal: $\hat{e}(n) = (1- \beta)\hat{e}(n - 1) + \beta e(n)$
Compute current packet drop probability:

$$p_d(n) = \left[ p_d(n-1) + \alpha \frac{\hat{e}(n)}{2T(n)} \right]_0^{pmax \leq 1}$$

The $2T(n)$ term in the above computation is simply a normalization parameter so that the chosen control gain $\alpha$ can be preserved throughout the control process since $T$ can vary. The normalization constant in the DRED algorithm is generally the buffer size $B$.

Use $p_d(n)$ as the packet drop probability until time n+1, when a new $p_d$ is to be computed again

Store $\hat{e}(n)$ and $p_d(n)$ to be used at time n+1.

In DRED, a good measure of the actual packet loss rate is the packet drop probability $p_d(n)$. $p_d(n)$ converges asymptotically to the actual loss rate. Thus, $p_d(n)$ approximates the actual loss rate very well. Therefore, $p_l(n)=p_d(n)$ is used in this embodiment as an indicator for varying the control target $T$ in order to reduce losses. The $p_l(n)=p_d(n)$ values are filtered as described earlier to obtain $\hat{p}_l(n)$ which is then used in the high-level controller. The filtered values are computed as follows:

$$\hat{p}_l(n) \leftarrow (1 - \gamma)\hat{p}_l(n - 1) + \gamma p_d(n), \qquad 0 < \gamma < 1 .$$

An embodiment using the RED algorithm

The RED maintains a weighted average of the queue length which it uses to detect congestion. When the average queue length exceeds a minimum threshold $L$, packets are randomly dropped with a given probability. The probability that a packet arriving at the RED queue is dropped depends on, among other things, the average queue length, the time elapsed since the last packet was dropped, and a maximum packet drop probability parameter $max_p$. When the average queue length exceeds a maximum threshold $T$, all arriving packets are dropped.

The basic RED algorithm is as shown in the following pseudo-code: RED control parameters:

Filter gain $W_q$; minimum queue threshold $L$; maximum queue threshold $T$; maximum packet drop probability $max_p$.

```
for each packet arrival
   calculate the new average queue size avg
   if L < avg < T
      calculate probability pa
      with probability pa:
         mark/drop the arriving packet
   else if T ≤ avg
      drop the arriving packet
```

where $avg$ is the average queue size, $p_a$ is the RED final packet drop probability. $L$ and $T$ are the threshold parameters that control the average queue length and are defined by the network manager.

The average queue size, $avg$, is maintained by the RED gateway using an EWMA filter

$$avg \leftarrow (1 - w_q) \cdot avg + w_q \cdot q$$

where $w_q$ is the filter gain, and $q$ is the current queue size. The RED final drop probability $p_a$ is derived such that

$$p_b \leftarrow max_p \cdot \frac{avg - L}{T - L}$$

$$p_a \leftarrow \frac{p_b}{1 - count \cdot p_b}$$

where $max_p$ is a scaling parameter that defines the maximum drop probability, $p_b$ is a RED temporary drop probability and $count$ is a variable that keeps track of the number of packets that have been forwarded since the last drop. The use of the variable $count$ in this equation causes the packet drops to be evenly distributed over the interval $[1, 1/p_b]$. In RED gateways, when $L$ and $T$ are fixed, the overall loss rate is controlled by the value $max_p$.

In this embodiment, the minimum threshold $L$ is set to a fixed value equal to one bandwidth-delay product worth of data. The maximum threshold $T$ is then adjusted dynamically according to the control needs.

Loss Behavior of the RED Algorithm

The plot of the temporary packet drop probability $p_b$ used in the RED calculations as a linear function of the average queue size $avg$ is shown in Figure 5. This temporary packet drop probability $p_b$ can also be expressed as follows:

$$p_b \leftarrow max_p \cdot \frac{avg - L}{T - L} = max_p \cdot X.$$

That is, $p_b$ is a linear function of the quantity $X$, $0 \le X \le 1$, which is defined as the normalized buffer fill.

It is shown in the afore-mentioned article by Floyd et al that the interdropping time $r$ between two packets follows a geometric distribution with parameter $p_b$ and mean $E[\tau] = 1/p_b$ if each packet is dropped with probability $p_b$, that is, Prob$[\tau = m] = (1- p_b)^{m-1} p_b$. The interdropping time $r$ is the number of packets that arrive after a dropped packet until the next packet is dropped. For example, when $max_p = 0.1$, 1 out of every 10 packets on average will be dropped when the average queue size is close to the maximum threshold T (i.e., $X \to 1$). This generates an average packet loss rate of 10%. Although $1/p_b$ packets are dropped on average, it is shown that this probability does not achieve the goal of dropping packets at fairly regular intervals over short periods. The article by Floyd et al referenced above therefore proposes the computation of the RED final packetdrop probability as follows:

$$p_a \leftarrow \frac{p_b}{1-count \cdot p_b} = \frac{1}{\frac{1}{p_b} - count}$$

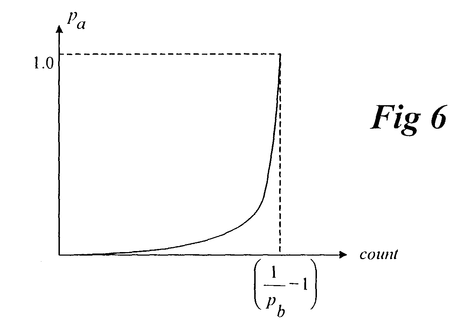

The plot of RED final packet drop probability $p_a$ is therefore an exponential function of the count and is shown in Figure 6. The value of $p_a$ increases slowly and then rises dramatically until it reaches $p_a = 1$ at count $= (1/p_b - 1)$. Note that this quantity changes with each packet arrival and therefore cannot be used as a true reflection of the loss rate as in the case of the temporary packet-marking probability $p_b$ or $p_d$ in DRED.

It is shown again in the afore-mentioned article by Floyd et al that by using the final packet drop probability $p_a$, the intermarking time $\tau$ between two packets follows a uniform distribution with a mean of approximately $E[\tau] = 1/(2p_b)$ (as opposed to $1/p_b$ in the case of using the temporary packet drop probability $p_b$). Therefore, when $max_p = 0.1$, then approximately 1 out of every 5 packets will be dropped when the average queue size is close to the maximum threshold $T$ (i.e., $X \to 1$). This generates an average packet loss rate of 20%. Note the factor of 2 2 in the ratio between the mean intermarking times of the two marking methods for the same average queue size.

As an example, when $max_p = 0.1$, it can be seen that a packet loss rate of 10% is achieved when the $X$ quantity defined earlier is equal to ½. That is, when the average queue size is exactly halfway between the minimum and maximum threshold (i.e., $X = 0.5$), a loss rate of 10% is achieved given that $max_p = 0.1$. If $X < 0.5$, a loss rate smaller than 10% is achieved, while when $X > 0.5$, a loss rate higher than 10% is achieved. Now assume that the minimum threshold is set to zero, without loss of generality. The probability $p_b$, which will give a packet loss rate of $\phi = 10\%$ in this example (for a $max_p = 0.1$ ), is given by:

$$p_b \approx max_p \cdot \frac{avg}{T} = max_p \cdot X = max_p \cdot = \frac{1}{2} \qquad (1)$$

This results in the average intermarking time between two packets (when packets are marked with probability $p_a$) being

$$E[\tau] = \frac{1}{2p_b} \approx \frac{1}{max_p} \text{ packets.}$$

This generates an average packet loss rate of

$$\phi = \frac{1}{E[\tau]} = 2p_b = max_p.$$

From this example, this corresponds to marking 1 out of every 10 packets, achieving a loss rate of 10%, as expected. Therefore, as long as the relationship $X = 0.5$ in equation (1) above holds, a 10% packet loss rate will be enforced. However, it is impossible for this relationship to be maintained over time, since the average queue size changes over time (as a function of the system load), and the maximum threshold $T$ is a static parameter in the basic RED technique. As a solution, one possibility is to scale the maximum threshold $T$ in relation to the average queue size $avg$. That is, to maintain a $max_p = 0.1$ in the above example (corresponding to a loss rate $\phi = 10\%$), $T$ can be varied accordingly in $avg / T$ to obtain the ratio of ½.

Following are some observations regarding the control of packet loss using the RED algorithm:

(1) Assuming that the target loss rate $\theta_{max}$ is 5% and $max_p$ is set to 5%. Then on average I out of every 20 packets must be marked/dropped. For this to be achieved we require the average intermarking time between two packets to be:

$$E[\tau] = \frac{1}{2p_b} = 20 \text{ packets.}$$

This gives probability $p_b$ equal to 2.5%. Thus, to achieve the target loss rate, the probability $p_b$ needs to be maintained constant over time. To do so, the ratio between the average queue size $avg$ and maximum threshold $T$ must be equal to ½, as indicated by (1) for a $max_p$ set to 5%. If $max_p$ is set to a higher value (for the same target loss rate), then the ratio between the average queue size and maximum threshold must be smaller, whereas if $max_p$ is set to a lower value, the ratio must be larger. This means that regardless of the setting of $max_p$, the ratio $avg/T$ can be varied to obtain a constant $p_b$. That is, to achieve a target loss rate for any setting of $max_p$, we want to maintain

$$p_b \approx max_p \cdot \frac{avg}{T} = \text{constant}$$

such that the target loss rate $\theta_{max} = 1/ E[\tau] = 2p_b$ is obtained. This suggests that $max_p$ is not a critical factor but rather maintaining a constant $P_b$ that results in the target loss rate of $\theta_{max} = 1/ E[r] = 2p_b$ is more important.

(2) The RED final packet drop probability $p_a$ is not a good representation of the loss rate as explained above, since it changes each packet arrival. However, filtering it (i.e., filtering all those exponential curves) gives us an estimate of the loss rate. The RED final packet drop probability $p_a$ is therefore filtered by using an EWMA filter with a gain of $\gamma = 0.00005$. That is,

$$\hat{p}_l = (1 - \gamma)\hat{p}_l + \gamma p_a.$$

This filtered quantity (i.e., output of the parameter estimator) is input to the controller design block of the high-level controller. This value is used to adapt the maximum threshold $T$ according to the algorithms described earlier. It can be seen that when the traffic load increases/decreases, the average queue size increases/decreases, resulting in changes of the quantity $X$ (which is the ratio between the average queue size $avg$ and maximum threshold $T$). Consequently, the probabilities $p_b$ and $p_a$ change, causing a deviation from the target loss rate. The algorithms described earlier are used to detect such deviations so that the threshold $T$ can be changed accordingly. Basically, as illustrated in the previous example, if $X$ increases beyond ½ due to a load increase, the filtered quantity will increase beyond the target loss rate of 5%. The maximum threshold $T$ is thus increased making $X$ to converge back to ½, resulting in the loss rate converging back to 5%. The same applies when there is a decrease in the system load.

**Claims**

1.  In a packet network, a method of managing a buffer at an outgoing link of a node comprising steps of:

    monitoring the status of a queue in relation to a queue threshold;
    generating congestion notifications to data sources in response to the status of the queue;
    computing an indication concerning a system load of the node from the rate of congestion notifications;
    adjusting the queue threshold in response to the indication to keep the operation of the data sources within a preferred envelope.

2.  The method of managing a buffer at an outgoing link of a node according to claim 1, wherein further comprising steps of:

    determine a deviation of the indication from a target value; and
    adjusting the queue threshold in if the deviation is larger than a predetermined value for at least a predetermined duration of time.

3.  The method of managing a buffer at an outgoing link of a node according to claim 2, comprising a further step of:
    monitoring the congestion notifications over time to derive a congestion notification rate parameter.

4.  The method of managing a buffer at an outgoing link of a node according to claim 2, comprising a further step of:
    monitoring the congestion notifications at a predetermined sampling interval to derive a congestion notification rate parameter.

5.  The method of managing a buffer at an outgoing link of a node according to claim 2, comprising further steps of:

    performing a random early detection buffer management process;
    observing variables of the process; and
    computing from the variables the indication concerning the system load of the node.

6.  The method of managing a buffer at an outgoing link of a node according to claim 3, further comprising steps of:

    monitoring a current queue size;
    computing an error signal in response to the current queue size and the queue threshold; and
    computing a current congestion notification probability as the congestion notification rate parameter using the error signal.

7.  The method of managing a buffer at an outgoing link of a node according to claim 6, further comprising a step of:
    filtering the current congestion notification probability to generate a smoothed congestion notification probability by using an exponentially weighted moving average filter with a predetermined gain.

8.  The method of managing a buffer at an outgoing link of a node according to claim 7, wherein there are two queue thresholds and one being set to the other with a predetermined linear relationship, the method further comprising a step of:
    adjusting one of the two queue thresholds in proportion to the deviation.

9.  The method of managing a buffer at an outgoing link of a node according to claim 8, wherein the step of adjusting the queue threshold is performed through the use of smoothing block.

10. The method of managing a buffer at an outgoing link of a node according to claim 4, further comprising steps of:

    monitoring a current queue size;
    computing an error signal in response to the current queue size and the queue threshold; and
    computing a current congestion notification probability as the congestion notification rate parameter using the error signal.

11. The method of managing a buffer at an outgoing link of a node according to claim 10, further comprising a step of:
    filtering the current packet congestion notification probability to generate a smoothed congestion notification probability by using an exponentially weighted moving average filter with a predetermined gain.

12. The method of managing a buffer at an outgoing link of a node according to claim 11, wherein there are two queue thresholds and one being set to the other with a predetermined linear relationship, the method further comprising a step of:

adjusting one of the two queue thresholds in proportion to the deviation.

13. The method of managing a buffer at an outgoing link of a node according to claim 12, wherein the step of adjusting the queue threshold is performed through the use of smoothing block.

14. The method of managing a buffer at an outgoing link of a node according to claim 5, further comprising steps of:

monitoring a current queue size;
computing an error signal in response to the current queue size and the queue threshold; and
computing a current congestion notification probability as the congestion notification rate parameter using the error signal; and
using the congestion notification rate parameter as the variable from which the indication concerning the system load of the node is computed.

15. The method of managing a buffer at an outgoing link of a node according to claim 14, further comprising a step of:

filtering the current congestion notification probability to generate a smoothed congestion notification probability by using an exponentially weighted moving average filter with a predetermined gain.

16. The method of managing a buffer at an outgoing link of a node according to claim 15, wherein there are two queue thresholds and one being set to the other with a predetermined linear relationship, the method further comprising a step of:

adjusting one of the two queue thresholds in proportion to the deviation.

17. The method of managing a buffer at an outgoing link of a node according to claim 16, wherein the step of adjusting the queue threshold is performed through the use of smoothing block.

18. The method of managing a buffer at an outgoing link of a node according to claim 3, further comprising steps of:

monitoring an average queue size over time;
counting the number of forwarded packets; and
computing a current congestion notification probability as congestion notification rate parameter using the count and the average queue size in relation to the queue threshold.

19. The method of managing a buffer at an outgoing link of a node according to claim 18, further comprising a step of:

filtering the current packet congestion notification probability to generate a smoothed packet congestion notification probability by using an exponentially weighted moving average filter with a predetermined gain.

20. The method of managing a buffer at an outgoing link of a node according to claim 19, wherein there are two queue thresholds and one being set to the other with a predetermined linear relationship, the method further comprising a step of:

adjusting one of the two queue thresholds in proportion to the deviation.

21. The method of managing a buffer at an outgoing link of a node according to claim 20, wherein the step of adjusting the queue threshold is performed through the use of smoothing block.

22. The method of managing a buffer at an outgoing link of a node according to claim 4, further comprising steps of:

monitoring an average queue size over time;
counting the number of forwarded packets; and
computing a current congestion notification probability as congestion notification rate parameter using the count and the average queue size in relation to the queue threshold.

23. The method of managing a buffer at an outgoing link of a node according to claim 22, further comprising a step of:

filtering the current congestion notification probability to generate a smoothed congestion notification probability by using an exponentially weighted moving average filter with a predetermined gain.

**24.** The method of managing a buffer at an outgoing link of a node according to claim 23, wherein there are two queue thresholds and one being set to the other with a predetermined linear relationship, the method further comprising a step of:

adjusting one of the two queue thresholds in proportion to the deviation.

**25.** The method of managing a buffer at an outgoing link of a node according to claim 24, wherein the step of adjusting the queue threshold is performed through the use of smoothing block.

**26.** The method of managing a buffer at an outgoing link of a node according to claim 5, further comprising steps of:

monitoring an average queue size over time;
counting the number of forwarded packets; and
computing a current congestion notification probability as congestion notification rate parameter using the count and the average queue size in relation to the queue threshold; and
using the congestion notification rate parameter as the variable from which the indication concerning the system load of the node is computed.

**27.** The method of managing a buffer at an outgoing link of a node according to claim 26, further comprising a step of:

filtering the current packet congestion notification probability to generate a smoothed packet congestion notification probability by using an exponentially weighted moving average filter with a predetermined gain.

**28.** The method of managing a buffer at an outgoing link of a node according to claim 27, wherein there are two queue thresholds and one being set to the other with a predetermined linear relationship, the method further comprising a step of:

adjusting one of the two queue thresholds in proportion to the deviation.

**29.** The method of managing a buffer at an outgoing link of a node according to claim 28, wherein the step of adjusting the queue threshold is performed through the use of smoothing block.

**30.** A mechanism for managing a buffer at an outgoing link of a node in a packet network comprising:

a queue for buffering packets to be transmitted from the node onto the outgoing link;
a first controller for monitoring the status of the queue with respect to a first queue threshold and generating congestion notifications to data sources in response the status of the queue;
a parameter estimation block for generating an indication concerning a system load of the node; and
a second controller for adjusting the first queue threshold in response to the indication to keep the operation of the data sources within a preferred envelope.

**31.** The mechanism for managing a buffer at an outgoing link of a node in a packet network according to claim 30, wherein the first controller further comprises a congestion notification module for generating congestion notifications in accordance with the queue status.

**32.** The mechanism for managing a buffer at an outgoing link of a node in a packet network according to claim 31, wherein the first controller operates at a faster speed than the second controller.

**33.** The mechanism for managing a buffer at an outgoing link of a node in a packet network according to claim 30, wherein the parameter estimation block further comprises congestion notification module for computing congestion notification probability, and an exponentially weighted moving average filter with a predetermined gain for removing transient component of the congestion notification probability

**34.** The mechanism for managing a buffer at an outgoing link of a node in a packet network according to claim 30, wherein the second controller further comprises a smoothing block for smoothing the adjustment of the first queue threshold.

**35.** The mechanism for managing a buffer at an outgoing link of a node in a packet network according to claim 32, wherein the smoothing block is either a low pass filter or a ramp unit.

**36.** The mechanism for managing a buffer at an outgoing link of a node in a packet network according to claim 30, further comprising a second queue threshold which has a predetermined linear relationship with the first queue threshold.

# Fig 1

Parameter Estimates (Drop Rate Estimates)

Drop Rate Specifications

High-Level Controller — Controller Design — 28

Queue Threshold Adjustments

Queue Threshold(s)

Packet Drop Controller

Low-Level Controller — 16

Drop Probability

Queue Size

Parameter Estimation — 18 — 10 — 26

Drop Probability — 24 — 22

Packet Arrival Rate — 20

TCP Source(s) — Router Queue

Process — 14 — 12

Queue Size

EP 1 128 610 A2

Target
Loss Rate
$\theta_{max}$   Actual
Loss Rate                    ***Fig 2***                Queue   Control
                                                        Size $q$  Parameters

                              40

High-level        Queue Threshold(s)        Low-level        Drop/Mark
Controller                                  Controller       Rate

Target
Loss Rate   Actual                        ***Fig 3***                Queue   Control
$\theta_{max}$  Loss Rate                                            Size $q$  Parameters

54                                50                  Smoothed                        52
                                                      Queue
                   Queue                              Threshold(s)
                   Threshold(s)   Low-Pass Filter
High-level                        or                  Low-level        Drop/Mark
Controller                        Ramping Unit         Controller       Rate

EP 1 128 610 A2

EP 1 128 610 A2

Amplitude
Limiter

Integrator

$T$ $+$ $e$ sat($e$) $\dfrac{1}{s}$ $y$

$-$

$y$

*Fig 4*

$p_b$

1.0

$max_p$

$L$ $T$ $avg$

*Fig 5*

*Fig 6*

EP 1 128 610 A2